# FASCICULE DE BREVET EUROPEEN

(11) **EP 3 871 296 B1**
(45) Date de publication et mention de la délivrance du brevet: **27.11.2024**
(21) Numéro de dépôt: 19790862.7
(22) Date de dépôt: 22.10.2019
(51) Int. Cl.: H01R 13/66, B60L 53/16, G01K 1/16

(54) **DISPOSITIF DE CONNEXION POUR VÉHICULE ÉQUIPÉ D'UN CAPTEUR DE TEMPÉRATURE**
VERBINDUNGSVORRICHTUNG FÜR EIN MIT EINEM TEMPERATURSENSOR AUSGESTATTETES FAHRZEUG
CONNECTION DEVICE FOR A VEHICLE EQUIPPED WITH A TEMPERATURE SENSOR

(30) Priorité: 23.10.2018 FR 1859762
(43) Date de publication de la demande: 01.09.2021
(73) Titulaire: Aptiv Technologies AG, 8200 Schaffhausen (CH)
(72) Inventeur: MALANDAIN, Olivier, 45140 Ormes (FR); BARLERIN, Stéphane, 26220 Dieulefit (FR)
(74) Mandataire: INNOV-GROUP
(86) Numéro de dépôt international: PCT/IB2019/059002
(87) Numéro de publication internationale: WO 2020/084479

(56) Documents cités:
- CN-A- 105 811 184
- CN-A- 106 956 613
- CN-U- 207 381 646
- DE-A1- 102014 111 185
- DE-A1- 102016 211 876
- US-A1- 2018 233 936

## Description

### Domaine technique

La présente invention concerne un dispositif de connexion pour le raccordement électrique d'un véhicule à un cordon de charge.

### Etat de la technique

La présente invention concerne plus particulièrement un dispositif de connexion comprenant une embase de connexion munie d'au moins deux contacts de puissance destinés au rechargement des batteries d'un véhicule électrique ou hybride. Pour permettre un temps de charge réduit, il est prévu d'augmenter la puissance électrique de chargement ce qui nécessite d'augmenter la tension de charge et l'intensité du courant. Il est envisagé de faire passer l'intensité du courant électrique de 125 à 200 Ampères actuellement, pour un chargement en courant continu, à 500 Ampères.

L'augmentation importante de l'intensité du courant amène des risques plus importants de surchauffe, ce qui peut provoquer des départs de feu. Il est donc nécessaire de surveiller toute élévation de température, en particulier au niveau des contacts de puissance, au moyen de capteurs de température.

Le document CN106956613 décrit un connecteur de recharge pour véhicule comportant un capteur de température.

Le document DE102014111185 décrit un dispositif de connexion conforme au préambule de la revendication 1.

Les solutions existantes pour détecter les élévations de température ne sont pas satisfaisantes.

### Résumé de l'invention

La présente invention propose d'améliorer la détection de température en proposant un dispositif de connexion pour le raccordement électrique d'un véhicule à un cordon de charge muni d'une prise de charge, le dispositif de connexion comportant un boîtier dans lequel sont montés au moins un premier et un second contacts de puissance, chaque contact de puissance comportant un tronçon arrière qui s'étend dans une partie arrière du boîtier, suivant une direction sensiblement parallèle à une direction de branchement de la prise de charge, l'embase de connexion étant prévue pour permettre le branchement d'une prise de charge complémentaire. Avantageusement, au moins une plaque à circuit imprimé est montée dans la partie arrière du boîtier, la plaque à circuit imprimé s'étendant selon un plan sensiblement parallèle à la direction de branchement, ladite plaque à circuit imprimé comportant une première face munie d'un premier coussin métallique qui est comprimé entre la plaque à circuit imprimé et une surface axiale du tronçon arrière du premier contact de puissance, et une seconde face munie d'un premier capteur de température qui est agencé en vis-à-vis du premier coussin métallique, de manière à permettre une détection rapide de toute élévation anormale de température au niveau du premier contact de puissance.

Selon une autre caractéristique avantageuse, le boîtier comporte dans sa partie arrière deux rainures sensiblement parallèles à la direction de branchement qui reçoivent des bords opposés de la plaque à circuit imprimé.

Selon une autre caractéristique avantageuse, le boîtier comporte dans sa partie arrière une paroi de maintien qui est sensiblement parallèle à la direction de branchement et qui est en contact avec la surface axiale du tronçon arrière du premier contact de puissance, dans une zone du premier contact de puissance diamétralement opposée au premier coussin métallique.

Selon une autre caractéristique avantageuse, la paroi de maintien comporte une portion de surface cylindrique qui épouse la surface axiale du tronçon arrière avec lequel la paroi de maintien est en contact.

Selon une autre caractéristique avantageuse, la plaque à circuit imprimé comporte sur sa première face un second coussin métallique qui est comprimé entre la plaque à circuit imprimé et une surface axiale du tronçon arrière du second contact de puissance, et sur sa seconde face un second capteur de température qui est agencé en vis-à-vis du second coussin métallique.

Selon une autre caractéristique avantageuse, le premier et le second capteurs de température sont des composants électroniques montés en surface et soudés sur la seconde face de la plaque à circuit imprimé.

Selon une autre caractéristique avantageuse, le coussin métallique est réalisé avec de l'argent ou de l'étain qui est déposé sur la première face de la plaque à circuit imprimé.

Selon une autre caractéristique avantageuse, la couche d'argent ou d'étain formant chaque coussin métallique est déposée sur une surface de cuivre agencée préalablement sur la première face de la plaque à circuit imprimé.

### Brève description des dessins

D'autres caractéristiques, buts et avantages de l'invention apparaîtront à la lecture de la description détaillée qui va suivre, et en regard des dessins annexés, donnés à titre d'exemple non limitatif et sur lesquels:
[Fig 1] est une vue générale en perspective qui représente un dispositif de connexion pour le branchement d'une prise de charge ;
[Fig 2] est une vue en perspective qui représente la partie arrière du dispositif de connexion de la figure 1 équipée de capteurs de température selon un mode de réalisation de l'invention ;
[Fig 3] est une vue de dessus selon la direction F3 qui représente la partie arrière du dispositif de connexion de la figure 2 ;
[Fig 4] est une vue en perspective qui représente la plaque à circuit imprimé munie de coussins métalliques qui équipe le dispositif de connexion selon l'invention.

### Description détaillée

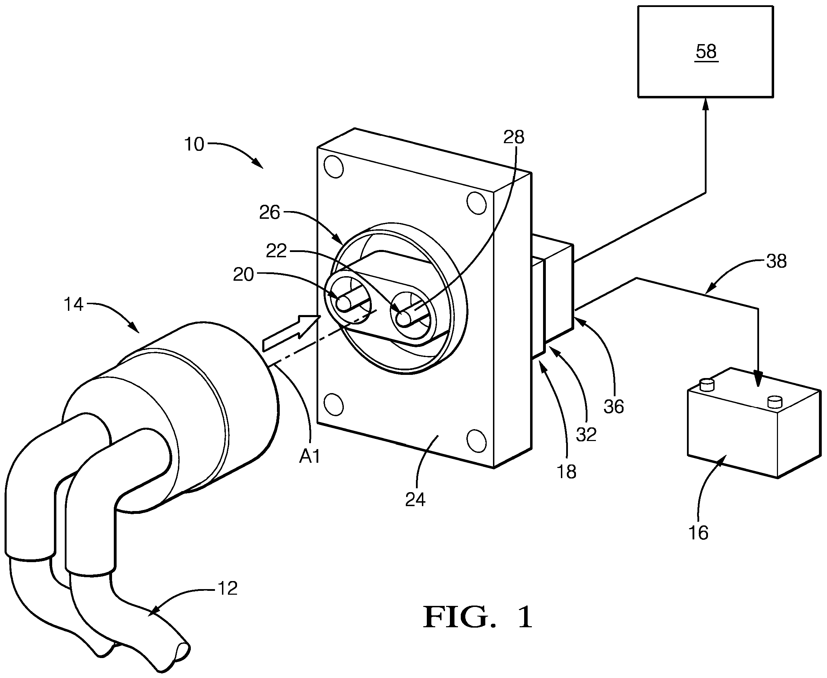

La figure 1 représente un dispositif de connexion 10 pour le raccordement électrique d'un véhicule (non représenté) à un cordon de charge 12 muni d'une prise de charge 14. Le dispositif de connexion 10 est lui-même raccordé électriquement à au moins une batterie 16 embarquée dans le véhicule et destinée à être chargée via la prise de charge 14.

Le dispositif de connexion 10 comporte un boîtier 18 dans lequel sont montés un premier et un second contacts de puissance 20, 22. Le boîtier 18 comporte, dans une paroi avant 24, c'est-à-dire du côté de la prise de charge 14, une embase de connexion 26 qui est configurée pour recevoir de manière complémentaire la prise de charge 14 en vue d'établir une connexion électrique entre le cordon de charge 12 et la batterie 16.

Dans la suite de la description, on utilisera à titre non limitatif une orientation de l'avant vers l'arrière suivant une direction de branchement A1 de la prise de charge 14 dans l'embase de connexion 26. De plus, des éléments identiques ou similaires pourront être désignés par les mêmes références.

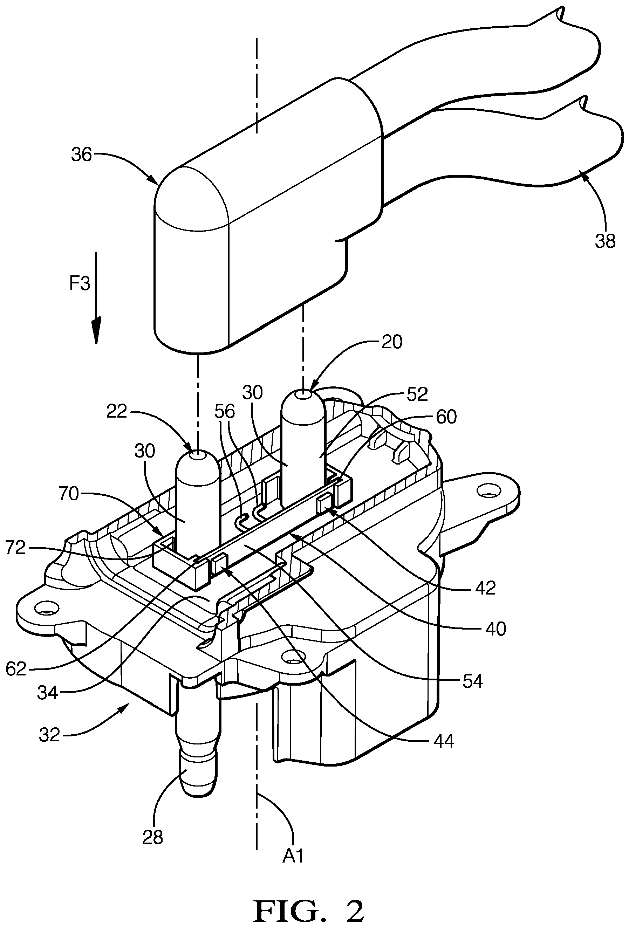

Comme on peut le voir plus particulièrement sur la figure 2, chaque contact de puissance 20, 22 a la forme d'une tige globalement cylindrique qui comporte un tronçon avant 28 s'étendant dans l'embase de connexion 26, à l'avant du boîtier 18, et un tronçon arrière 30 s'étendant dans une partie arrière 32 du boîtier 18. La partie arrière 32 du boîtier 18 comporte une paroi arrière 34 qui est sensiblement perpendiculaire à la direction de branchement A1. Le tronçon arrière 30 de chaque contact de puissance 20, 22 déborde de la paroi arrière 34 vers l'arrière pour permettre le raccordement électrique à la batterie 16. Un connecteur 36, raccordé à la batterie 16 par des câbles 38, est prévu pour être monté contre la partie arrière 32 du boîtier 18 en établissant un contact électrique avec le tronçon arrière 30 de chaque contact de puissance 20, 22.

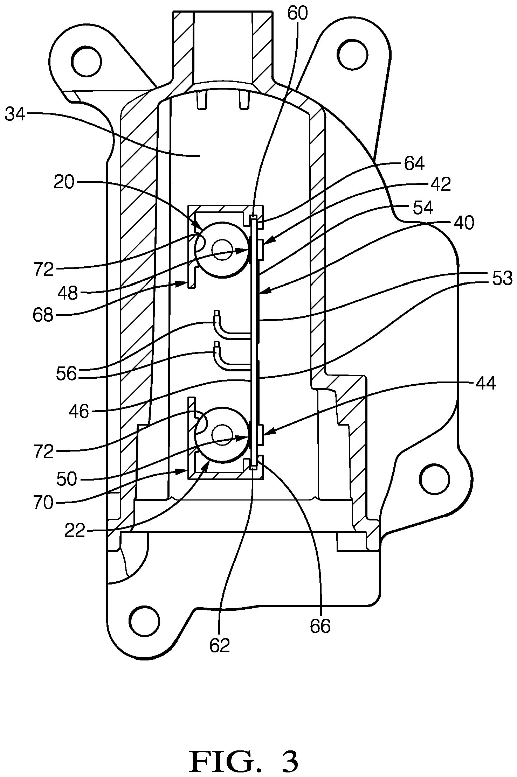

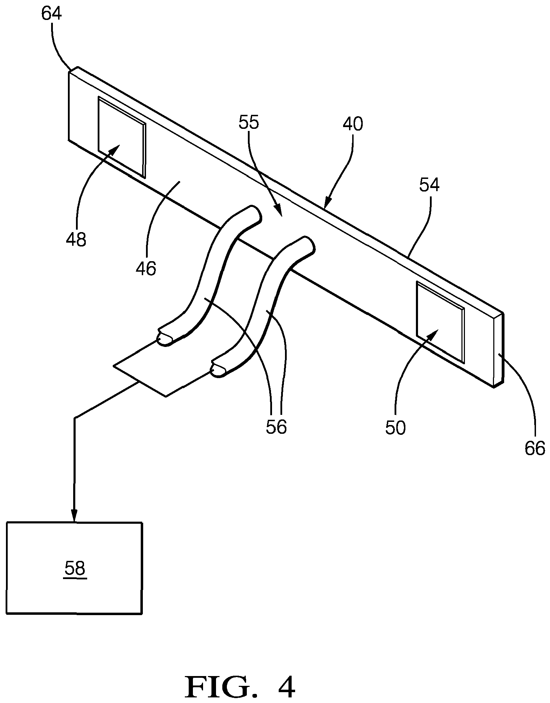

Selon un mode de réalisation de l'invention, illustré plus particulièrement par les figures 2, 3, et 4, une plaque à circuit imprimé 40, munie d'un premier et d'un second capteurs de température 42, 44, est montée dans la partie arrière 32 du boîtier 18 de sorte que la plaque à circuit imprimé 40 s'étende dans un plan sensiblement parallèle à la direction de branchement A1. Plus précisément, dans le présent exemple non limitatif, la plaque a circuit imprimé 40 a ici la forme d'une plaquette rectangulaire dont la largeur s'étend parallèlement à la direction de branchement A1 et dont la longueur s'étend perpendiculairement à la direction de branchement A1, depuis le premier contact de puissance 20 jusqu'au second contact de puissance 22. En variante, d'autres orientations de montage de la plaque à circuit imprimé 40 peuvent permettre d'obtenir une plaque à circuit imprimé 40 qui s'étend dans un plan sensiblement parallèle à la direction de branchement A1. La plaque à circuit imprimé 40 comporte une première face 46 munie d'un premier et d'un second coussins métalliques 48, 50 qui sont prévus pour être plaqués contre la paroi cylindrique externe 52 du contact de puissance 20, 22 associé. Le premier et le second capteur de température 42, 44 sont montés sur une seconde face 54 de la plaque à circuit imprimé 40, du côté opposé aux coussins métalliques 48, 50. Avantageusement, le premier capteur de température 42 est agencé en vis-à-vis du premier coussin métallique 48 et le second capteur de température 44 est agencé en vis-à-vis du second coussin métallique 50.

La plaque à circuit imprimé 40 comporte des pistes conductrices 53 qui permettent le raccordement électrique des capteurs de température 42, 44 à une zone de raccordement 55 où sont branchés des fils électriques 56. Les fils électriques 56 permettent de transmettre les informations de température fournies par les capteurs de température 42, 44 à une unité électronique de contrôle 58 associée. L'unité électronique de contrôle 58 peut ainsi détecter, via les capteurs de température 42, 44, une élévation anormale de la température au niveau des contacts de puissance et déclencher une mise en sécurité du dispositif de connexion 10.

Avantageusement, les coussins métalliques 48, 50 sont réalisés par dépôt de métal suivant les technologies de fabrication de plaque à circuit imprimé, par exemple par dépôt d'une couche d'argent ou d'une couche d'étain sur la première face 46 de la plaque à circuit imprimé 40. Plus particulièrement, la plaque à circuit imprimé 40 est munie d'une couche de cuivre qui sert à former les pistes conductrices 53 pour le raccordement électrique des composants, tels que les capteurs de température 42, 44 montés sur ladite plaque à circuit imprimé 40. Des surfaces en cuivre, dont la forme correspond globalement à la forme des coussins métalliques, sont donc agencées sur la première face 46 de la plaque à circuit imprimé 40 et une couche d'argent ou une couche d'étain sont déposés, par une méthode adaptée, sur ces surfaces en cuivre de manière à former les coussins métalliques 48, 50. Les coussins métalliques 48, 50 forment ainsi des plaquettes métalliques ou plots métalliques ou pastilles métalliques.

Le matériau formant les coussins métalliques 48, 50 est choisi pour être relativement tendre de manière que la surface externe du coussin métallique 48, 50 puisse se déformer lors de l'appui contre la paroi cylindrique externe 52 du contact de puissance 20, 22 associé. Les coussins métalliques 48, 50 ont une épaisseur suffisante pour permettre une légère déformation du matériau à la surface de chaque coussin métallique 48, 50, là où le contact de puissance 20, 22 vient en appui. Ceci permet de maximiser la surface de contact entre chaque coussin métallique 48, 50 et le contact de puissance 20, 22 associé pour assurer une conductivité thermique optimale entre les deux éléments. Avantageusement chaque coussin métallique 48, 50 a une épaisseur, perpendiculairement à la plaque à circuit imprimé 40, comprise entre 1 et 50 µm.

Le matériau choisi pour les coussins métalliques 48, 50 est choisi aussi pour ses qualités de conduction thermique vers les capteurs de température 42, 44, pour sa faculté à supporter les hautes tensions électriques passant par les contacts de puissance 20, 22, et pour son coût raisonnable. Alternativement les coussins métalliques 48, 50 peuvent être réalisés dans un autre matériau facile à déposer sur la plaque à circuit imprimé 40 et offrant des qualités et propriétés similaires.

L'agencement des coussins métalliques 48, 50 par rapport aux contacts de puissance 20, 22 doit permettre d'éviter au maximum la présence d'air entre ces deux éléments ce qui pénalise la conduction thermique vers les capteurs de température 42, 44.

Selon le mode de réalisation représenté ici, les coussins métalliques 48, 50 sont de forme rectangulaire ou carré. Alternativement ils pourraient être de formes différentes, par exemple ronds ou ovales.

Avantageusement, les capteurs de température 42, 44 sont des composants électroniques à montage en surface (CMS, ou « Surface Mount Component » selon la terminologie anglaise). Ils sont soudés directement sur la seconde face 54 de la plaque à circuit imprimé 40. Le montage des capteurs de température 42, 44 sur la face de la plaque à circuit imprimé 40 opposée aux contacts de puissance 20, 22 permet d'assurer une protection des capteurs de température 42, 44 contre les hautes tensions passant par les contacts de puissance 20, 22, le substrat de la plaque à circuit imprimé 40 agissant comme une barrière de protection.

Selon le mode de réalisation représenté, la partie arrière 32 du boîtier 18 comporte deux rainures 60, 62 sensiblement parallèles à la direction de branchement A1 qui reçoivent des bords 64, 66 opposés de la plaque à circuit imprimé 40. Ainsi la plaque à circuit imprimé 40 peut être montée sur la paroi arrière 34 par coulissement dans les rainures 60, 62, de l'arrière vers l'avant suivant la direction de branchement A1.

Selon le mode de réalisation représenté, la partie arrière 32 du boîtier 18 comporte une première et une seconde parois de maintien 68, 70 qui sont sensiblement parallèles à la direction de branchement A1 et qui sont en contact avec la surface axiale du tronçon arrière 30 respectivement du premier contact de puissance 20 et du second contact de puissance 22. Chaque paroi de maintien 68, 70 est en contact avec le contact de puissance 20, 22 associé du côté opposé au coussin métallique 48, 50 associé. Avantageusement, chaque paroi de maintien 68, 70 comporte une portion de surface cylindrique 72 qui épouse la surface axiale, ou paroi cylindrique externe, du tronçon arrière 30 avec lequel la paroi de maintien 68, 70 est en contact. Le positionnement de la paroi de maintien 68, 70 vis-à-vis des rainures 60, 62 et vis-à-vis de l'épaisseur de la plaque à circuit imprimé 40 est prévu pour assurer une légère pression du tronçon arrière 30 de chaque contact de puissance 20, 22 contre le coussin métallique 48, 50 associé lorsque tous les éléments sont montés ensemble. Il en résulte un montage en force des contacts de puissance 20, 22 entre les parois de maintien 68, 70 et les coussins métalliques 48, 50, et/ou un montage en force de la plaque à circuit imprimé 40 dans les rainures 60, 62. Ceci permet d'assurer un contact optimal entre les contacts de puissance 20, 22 et les coussins métalliques 48, 50. Ce contact optimal assure une conduction thermique optimale depuis le contact de puissance 20, 22 jusqu'au capteur de température 42, 44 associé, à travers le coussin métallique 48, 50 et à travers l'épaisseur de la plaque à circuit imprimé 40.

Dans le mode de réalisation représenté, les parois de maintien 68, 70 et les rainures 60, 62 sont réalisées venues de matière par injection de matière plastique avec la paroi arrière 34. Chaque rainure 60, 62 est formée dans une portion de paroi qui vient prolonger la paroi de maintien 68, 70 associée en vis-à-vis.

Le mode de réalisation représenté correspond à un dispositif de connexion 10 pour une embase de connexion 26 à deux contacts de puissance 20, 22. Bien entendu l'invention s'applique aussi à des embases de connexion 26 comportant plus de deux contacts de puissance 20, 22.

### Liste des références :

- 10: dispositif de connexion
- 12: cordon de charge
- 14: prise de charge
- 16: batterie
- 18: boîtier
- 20: premier contact de puissance
- 22: second contact de puissance
- 24: paroi avant
- 26: embase de connexion
- 28: tronçon avant
- 30: tronçon arrière
- 32: partie arrière
- 34: paroi arrière
- 36: connecteur
- 38: câbles
- 40: plaque à circuit imprimé
- 42: premier capteur de température
- 44: second capteur de température
- 46: première face
- 48: premier coussin métallique
- 50: second coussin métallique
- 52: paroi cylindrique externe
- 53: pistes conductrices
- 54: seconde face
- 56: fils électriques
- 58: unité électronique de commande
- 60: première rainure
- 62: seconde rainure
- 64: premier bord
- 66: second bord
- 68: première paroi de maintien
- 70: seconde paroi de maintien
- 72: portion de surface cylindrique

## Revendications

1. Dispositif de connexion (10) pour le raccordement électrique d'un véhicule à un cordon de charge (12) muni d'une prise de charge (14), le dispositif de connexion (10) comportant un boîtier (18) dans lequel sont montés au moins un premier et un second contacts de puissance (20, 22), chaque contact de puissance (20, 22) comportant un tronçon avant (28) qui s'étend dans une embase de connexion (26) à l'avant du boîtier (18) et un tronçon arrière (30) qui s'étend dans une partie arrière (32) du boîtier (18), suivant une direction sensiblement parallèle à une direction de branchement (A1) de la prise de charge (14), l'embase de connexion (26) étant prévue pour permettre le branchement de la prise de charge (14) complémentaire, ce dispositif comportant au moins une plaque à circuit imprimé (40) montée dans la partie arrière (32) du boîtier (18), la plaque à circuit imprimé (40) s'étendant selon un plan sensiblement parallèle à la direction de branchement (A1), **caractérisé en ce que** ladite plaque à circuit imprimé (40) comporte une première face (46) munie d'un premier coussin métallique (48) qui est comprimé entre la plaque à circuit imprimé (40) et une surface axiale du tronçon arrière (30) du premier contact de puissance (20), et une seconde face (54) munie d'un premier capteur de température (42) qui est agencé en vis-à-vis du premier coussin métallique (48), de manière à permettre une détection rapide de toute élévation anormale de température au niveau du premier contact de puissance (20).

2. Dispositif de connexion (10) selon la revendication précédente, **caractérisé en ce que** le boîtier (18) comporte dans sa partie arrière (32) deux rainures (60, 62) sensiblement parallèles à la direction de branchement (A1) qui reçoivent des bords opposés (64, 66) de la plaque à circuit imprimé (40).

3. Dispositif de connexion (10) selon la revendication précédente, **caractérisé en ce que** le boîtier (18) comporte dans sa partie arrière (32) une paroi de maintien (68) qui est sensiblement parallèle à la direction de branchement (A1) et qui est en contact avec la surface axiale du tronçon arrière (30) du premier contact de puissance (20), dans une zone du premier contact de puissance (20) diamétralement opposée au premier coussin métallique (48).

4. Dispositif de connexion (10) selon la revendication précédente, **caractérisé en ce que** la paroi de maintien (68) comporte une portion de surface cylindrique (72) qui épouse la surface axiale du tronçon arrière (30) avec lequel la paroi de maintien (68) est en contact.

5. Dispositif de connexion (10) selon l'une quelconque des revendications précédentes, **caractérisé en ce que** la plaque à circuit imprimé (40) comporte sur sa première face (46) un second coussin métallique (50) qui est comprimé entre la plaque à circuit imprimé (40) et une surface axiale du tronçon arrière (30) du second contact de puissance (22), et sur sa seconde face (54) un second capteur de température (44) qui est agencé en vis-à-vis du second coussin métallique (50).

6. Dispositif de connexion (10) selon la revendication 5, **caractérisé en ce que** le premier et le second capteurs de température (42, 44) sont des composants électroniques montés en surface et soudés sur la seconde face (54) de la plaque à circuit imprimé (40).

7. Dispositif de connexion (10) selon la revendication 5 ou 6, **caractérisé en ce que** chaque coussin métallique (48, 50) est réalisé avec de l'argent ou de l'étain qui est déposé sur la première face (46) de la plaque à circuit imprimé (40) ;

8. Dispositif de connexion (10) selon la revendication 7, **caractérisé en ce que** la couche d'argent ou d'étain formant chaque coussin métallique (48, 50) est déposée sur une surface de cuivre agencée préalablement sur la première face (46) de la plaque à circuit imprimé (40).

## Patentansprüche

1. Verbindungsvorrichtung (10) für die elektrische Verbindung eines Fahrzeugs mit einem Ladekabel (12), das mit einer Ladebuchse (14) versehen ist, wobei die Verbindungsvorrichtung (10) ein Gehäuse (18) aufweist, in dem sich befinden
mindestens einen ersten und einen zweiten Leistungskontakt (20, 22), wobei jeder Leistungskontakt (20, 22) einen vorderen Abschnitt (28), der sich in eine Verbindungsbasis (26) an der Vorderseite des Gehäuses (18) erstreckt, und einen hinteren Abschnitt (30) aufweist, der sich in einem hinteren Teil (32) des Gehäuses (18) in einer Richtung erstreckt, die im Wesentlichen parallel zu einer Richtung der Verbindung (26) mit dem Gehäuse (18) ist, und wobei jeder Leistungskontakt (20, 22) einen hinteren Abschnitt (30) aufweist, der sich in einer Richtung erstreckt, die im Wesentlichen parallel zu einer Richtung der Verbindung (26) mit dem Gehäuse (18) ist.
(A1) der Ladebuchse (14), wobei der Verbindungssockel (26) dazu vorgesehen ist, den Anschluss der komplementären Ladebuchse (14) zu ermöglichen, wobei diese Vorrichtung mindestens eine gedruckte Leiterplatte (40) umfasst, die in dem hinteren Teil (32) des Gehäuses (18) montiert ist, wobei sich die gedruckte Leiterplatte (40) in einer Ebene erstreckt, die im Wesentlichen parallel zu dem hinteren Teil (32) des Gehäuses (18) verläuft.
Verzweigungsrichtung (A1), **dadurch gekennzeichnet, dass** die Leiterplatte (40) eine erste Seite (46) mit einem ersten Metallkissen (48) aufweist, das zwischen der Leiterplatte (40) und der Verzweigungsrichtung (A1) zusammengepresst ist.
(40) und einer axialen Oberfläche des hinteren Abschnitts (30) des ersten Leistungskontakts (20), und eine zweite Seite (54), die mit einem ersten Leistungssensor versehen ist.
(42), der gegenüber dem ersten Metallkissen (48) angeordnet ist, um eine schnelle Erkennung eines abnormalen Temperaturanstiegs an dem ersten Leistungskontakt (20) zu ermöglichen.

2. Verbindungsvorrichtung (10) nach dem vorhergehenden Anspruch, **dadurch gekennzeichnet, dass** das Gehäuse (18) in seinem hinteren Teil (60, 62) im Wesentlichen parallel zu der Verzweigungsrichtung (A1), die gegenüberliegende Kanten (64, 66) der Leiterplatte (40) aufnehmen.

3. Verbindungsvorrichtung (10) nach dem vorhergehenden Anspruch, **dadurch gekennzeichnet, dass** das Gehäuse (18) in seinem hinteren Teil (32) eine Haltewand (68) aufweist, die im Wesentlichen parallel zur Abzweigrichtung ist
(A1) und die mit der axialen Oberfläche des hinteren Abschnitts (30) des ersten Leistungskontakts (20) in einem Bereich des ersten Leistungskontakts (20) diametral gegenüber dem ersten Metallkissen (48) in Kontakt steht.

4. Verbindungsvorrichtung (10) nach dem vorhergehenden Anspruch, **dadurch gekennzeichnet, dass** die Haltewand (68) einen zylindrischen Oberflächenabschnitt (72) aufweist, der sich an die axiale Oberfläche des hinteren Abschnitts (30) anpasst, mit dem die Haltewand (68) in Kontakt steht.

5. Verbindungsvorrichtung (10) nach einem der vorhergehenden Ansprüche, **dadurch gekennzeichnet, dass** die Leiterplatte (40) auf ihrer ersten Seite (46) ein zweites Metallkissen (50) aufweist, das zwischen der Leiterplatte (40) und einer axialen Oberfläche des hinteren Abschnitts (30) des zweiten Leistungskontakts (22) zusammengedrückt ist, und auf ihrer zweiten Seite (46) ein zweites Metallkissen (50) aufweist, das zwischen der Leiterplatte (40) und einer axialen Oberfläche des hinteren Abschnitts (30) des zweiten Leistungskontakts (22) zusammengedrückt ist.
zweite Seite (54) einen zweiten Temperatursensor (44), der gegenüber dem zweiten Metallkissen (50) angeordnet ist.

6. Verbindungsvorrichtung (10) nach Anspruch 5, **dadurch gekennzeichnet, dass** der erste und der zweite Temperatursensor (42, 44) oberflächenmontierte elektronische Bauteile sind, die auf der zweiten Seite verlötet sind
(54) der Leiterplatte (40).

7. Verbindungsvorrichtung (10) nach Anspruch 5 oder 6, **dadurch gekennzeichnet, dass** jedes Metallkissen (48, 50) aus Silber oder Zinn hergestellt ist, das auf die erste Seite (46) der Leiterplatte (40) aufgebracht wird ;

8. Verbindungsvorrichtung (10) nach Anspruch 7, **dadurch gekennzeichnet, dass** die Silber- oder Zinnschicht, die jedes Metallkissen (48, 50) bildet, auf einer Kupferoberfläche abgeschieden wird, die zuvor auf der ersten Seite (46) der Leiterplatte (40) angeordnet wurde.

## Claims

1. A connection device (10) for electrically connecting a vehicle to a charging cable (12) provided with a charging socket (14), the connection device (10) comprising a housing (18) in which there are mounted at least a first and a second power contact (20, 22), each power contact (20, 22) comprising a front section (28) which extends in a connection base (26) at the front of the casing (18) and a rear section (30) which extends in a rear part (32) of the casing (18), in a direction substantially parallel to a direction of
connection (A1) of the charging socket (14), the connection base (26) being provided to allow connection of the complementary charging socket (14), this device comprising at least one printed circuit board (40) mounted in the rear part (32) of the housing (18), the printed circuit board (40) extending in a plane substantially parallel to the connection base (26). branching direction (A1), **characterised in that** said printed circuit board (40) comprises a first face (46) provided with a first metal cushion (48) which is compressed between the printed circuit board (40) and the branching direction (A1).
(40) and an axial surface of the rear section (30) of the first power contact (20), and a second face (54) provided with a first power contact sensor.
temperature (42) which is arranged opposite the first metal cushion (48), so as to allow rapid detection of any abnormal rise in temperature at the first power contact (20).

2. Connection device (10) according to the preceding claim, **characterised in that** the rear part (32) of the housing (18) comprises two grooves (60, 62) substantially parallel to the connection direction (A1) which receive opposite edges (64, 66) of the printed circuit board (40).

3. Connection device (10) according to the preceding claim, **characterised in that** the housing (18) comprises in its rear part (32) a retaining wall (68) which is substantially parallel to the direction of connection.
(A1) and which is in contact with the axial surface of the rear section (30) of the first power contact (20), in a zone of the first power contact (20) diametrically opposite the first metal cushion (48).

4. Connection device (10) according to the preceding claim, **characterised in that** the retaining wall (68) comprises a cylindrical surface portion (72) which matches the axial surface of the rear section (30) with which the retaining wall (68) is in contact.

5. Connection device (10) according to any one of the preceding claims, **characterised in that** the printed circuit board (40) comprises on its first face (46) a second metal cushion (50) which is compressed between the printed circuit board (40) and an axial surface of the rear section (30) of the second power contact (22), and on its
second face (54) a second temperature sensor (44) arranged opposite the second metal cushion (50).

6. Connection device (10) according to claim 5, **characterized in that** the first and second temperature sensors (42, 44) are surface-mounted electronic components soldered to the second side.
(54) of the printed circuit board (40).

7. Connection device (10) according to claim 5 or 6, **characterised in that** each metal cushion (48, 50) is made with silver or tin which is deposited on the first face (46) of the printed circuit board (40);

8. Connection device (10) according to claim 7, **characterised in that** the layer of silver or tin forming each metal pad (48, 50) is deposited on a copper surface previously arranged on the first face (46) of the printed circuit board (40).
